# EUROPEAN PATENT SPECIFICATION

(11) **EP 4 426 488 B1**
(45) Date of publication and mention of the grant of the patent: **10.12.2025**
(21) Application number: 22813466.4
(22) Date of filing: 01.11.2022
(51) Int. Cl.: B01L 3/00, B01L 7/00, G01N 21/25, G01N 21/64, G02B 21/36, G01N 21/03

(54) **APPARATUS FOR CONDUCTING A BIOCHEMICAL ASSAY**
VORRICHTUNG ZUR DURCHFÜHRUNG EINES BIOCHEMISCHEN TESTS
APPAREIL PERMETTANT D'EFFECTUER UN DOSAGE BIOCHIMIQUES

(30) Priority: 02.11.2021 EP 21205941
(43) Date of publication of application: 11.09.2024
(73) Proprietor: Single Technologies AB, 112 34 Stockholm (SE)
(72) Inventor: STRÖMQVIST, Johan, 112 34 Stockholm (SE); SAHLGREN, Bengt, 112 34 Stockholm (SE); TINGSTAM, Nils, 112 34 Stockholm (SE); GORAN, Alan, 112 34 Stockholm (SE); ADRUP, Joakim, 112 34 Stockholm (SE); RASMUSSEN, Jens, 112 34 Stockholm (SE)
(74) Representative: AWA Sweden AB
(86) International application number: PCT/EP2022/080458
(87) International publication number: WO 2023/078873

(56) References cited:
- WO-A1-2016/030464
- WO-A1-2018/160629
- WO-A2-2004/108269
- JP-A- 2000 093 156
- US-A- 5 470 744

## Description

### Technical field

The present invention relates to an apparatus for conducting a biochemical assay on a sample and to a method for conducting a biochemical assay.

### Background

Biochemical assays are known as investigative procedures for qualitatively assessing or quantitatively measuring the presence, amount or functional activity of an analyte, or sample. One example of such procedure and an apparatus for such procedure is disclosed in WO2016/030464 and involves a confocal scanner and a rotating sample holder. The sample holder comprises a cylindrical body and the samples are arranged on the outer surface of the cylinder. The scanner may comprise a confocal microscope configured to illuminate and image the samples as the holder rotates around its length axis. This technique may for example be employed for sequencing DNA, wherein samples of immobilized single strands of DNA may be flushed with a solution (or reagent) of nucleotides equipped with fluorophores followed by an imaging step to measure the fluorescence and determine which nucleotide (if any) was incorporated on the strand. The configuration with samples arranged on the outer surface of a cylindrical and rotatable sample holder thus enables advantages in terms of throughput as compared to more conventional arrangements where the samples are provided on plates or plate-like structures. The scanning of the rotating sample holder allows for a relatively high throughput in terms of number of scanned samples per unit time, which enable statistical methods and big data analysis to be employed. The throughput is however known to be limited by practical considerations such as the time it takes to heat the samples to a suitable reaction temperature and to achieve a suitable environment for the reactions to take place. In particular when a multitude of assays are performed after one another in the apparatus, the heating time can significantly limit the throughput of said apparatus.

Consequently, there is a need for improved procedures that limit the time it takes for the apparatus to generate a suitable reaction temperature and environment for performing the assay.

### Summary

It is an object of the present invention to provide improved techniques for performing biochemical assays on samples, and to overcome or alleviate at least some of the drawbacks associated with the prior art techniques.

These and other objects, which will become apparent in the following, are accomplished by an apparatus and a method according to the independent claims.

Thus, according to a first aspect, an apparatus for conducting a biochemical assay on a sample is provided. The apparatus comprises a housing enclosing a reaction chamber, a rotation generating member configured to support a rotatable cylindrical body, wherein the rotatable cylindrical body is configured to hold at least one sample at an outer lateral surface thereof, and a humidifier configured to humidify an atmosphere in the reaction chamber. The rotation generating member is configured to support the rotatable cylindrical body such that at least part of the rotatable cylindrical body can be arranged within the reaction chamber, and further to rotate the rotatable cylindrical body around a longitudinal axis of the rotatable cylindrical body while at least a part of the assay is performed.

The apparatus further comprises a sample holder comprising the rotatable cylindrical body.

According to a second aspect, a method for performing an assay is provided, comprising:
arranging a rotatable cylindrical body at least partly in a reaction chamber enclosed by a housing, wherein at least one sample to be studied in the assay is arranged on an outer lateral surface of the rotatable cylindrical body;
rotating the rotatable cylindrical body around a longitudinal axis of the rotatable cylindrical body; and
humidifying an atmosphere in the reaction chamber.

The requirements on a reaction chamber for performing biochemical assays on samples may be briefly summarized as providing a controlled, elevated temperature for the sample holder while at the same time preventing the samples from drying out. This is accomplished by the apparatus disclosed herein by the provision of a humidifier capable of generating moisture and provide it into the reaction chamber. The moisture may be added to provide a suitable environment in the reaction chamber, preventing the samples from drying out. The moisture may further condense on the sample holder. This allows for the latent heat to be transferred to the sample holder, thereby increasing the temperature of the sample holder. The inventors have found that the condensation of moisture on the sample holder allows for a faster temperature increase than for example solutions based on convection heating.

The apparatus may comprise a heat source arranged for raising the temperature of an outside surface of said rotatable cylindrical body. The heat source may be a convection heat source or a radiation heat source. The heat source may be at least partly arranged within the reaction chamber.

The supply of moisture, such as for instance steam, may be controlled to regulate the condensation rate on the surface of the sample holder and thus the amount of liquid present on said surface. Adding liquid by condensation may be particularly advantageous in applications utilizing convection or radiation heating for regulating the temperature of the sample holder, as convection or radiation heating otherwise risks drying out the samples. The condensation rate may be adjusted to balance the evaporation rate so that the amount of liquid present on the surface is constant.

The term "biochemical assay on a sample" is known to the person skilled in the art and is intended to denote an analytical procedure to detect and quantify cellular processes (e.g. apoptosis, cell signaling) or metabolic reactions in a sample, preferably a biological sample. The samples may for example comprise DNA or RNA samples or fragments. Samples may be chemically attached to the outer lateral surface of the sample holder. Samples may be chemically or mechanically attached to a matrix at the outer lateral surface of the sample holder. Samples may be immobilized at the outer lateral surface of the sample holder by means of a permeable and transparent coating. In all cases samples are held at an outer lateral surface of said rotatable cylindrical body. Samples may be distributed in relation to the rotatable cylindrical body along an axial direction, along a rotational direction and/or along a radial direction.

The term "housing" as used herein is intended to denote a substantially closed compartment formed of connected wall portions, such as a top wall portion, a bottom wall portion and a side wall portion. The housing encloses a "reaction chamber" being defined by the inner surfaces of said wall portions. The housing should be capable of preventing debris from entering the reaction chamber. Furthermore, it should prevent a majority of the released moisture from escaping the reaction chamber during an assay such that an elevated temperature of the reaction chamber, and in particular of the part of a rotatable cylindrical body provided in the reaction chamber, can be kept for at least the time it takes to perform the assay.

The shape of the housing may vary, but quadrangular or cylindrical shapes are contemplated. The housing may have a size such that it can accommodate a rotatable cylindrical body acting as a sample container or sample holder therein.

Alternatively, the housing may be provided with at least one opening, preferably two opposing openings, in the wall, through which part of the rotatable cylindrical body can extend. In this example, the openings are preferably provided with a seal such that the atmosphere in the reaction chamber can be substantially maintained. This alternative may be advantageous in that it avoids exposing the end portions of sample holder to potentially damaging conditions in the reaction chamber.

A "rotation generating member" is intended to denote a structure which is capable of receiving and supporting a rotatable cylindrical body, and to rotate the body along a longitudinal (or length) axis of said body while the assay is performed. In the present disclosure, a rotatable cylindrical body is intended to be utilized as a sample holder. The rotatable cylindrical body is configured to hold samples at an outer lateral surface thereof. Preferably, the outer lateral surface is provided such that it surrounds a longitudinal axis of the rotatable cylindrical body. Normal vectors drawn from the outer lateral surface are preferably perpendicular to the longitudinal axis of the rotational body.

The rotatable cylindrical body may for instance be a cylindrical body, with the outer lateral surface forming a lateral surface of the cylindrical body and the longitudinal axis forming a central axis, such as a symmetry axis, of the cylindrical body. The rotatable cylindrical body may be a solid cylinder, e.g. made from quartz. The rotatable cylindrical body may alternatively be a hollow cylinder, which may be easier to heat compared to a solid cylinder. Thus, the rotatable cylindrical body may comprise a hollow interior, or void, reducing its thermal mass.

An advantage with using a rotatable cylindrical body is that the body can be rotated in a relatively constant manner, allowing for a steady state motion to be maintained without acceleration. Rotation as a means of motion is advantageous in terms of precision and allows for a relatively predictable and well-controlled trajectory of the samples during the assay. Preferably, the longitudinal axis may be an axis of rotational symmetry of the sample holder. Embodiments wherein the sample holder is rotated during a part of the assay and held in a fixed position during another part of the assay are encompassed within the scope of the inventive concept.

By rotating the rotatable cylindrical body, various parts of the sample holder (and consequently various samples), can be provided in proximity to various assay-related objects in the reaction chamber, such as a dispenser for dispensing reagents, or a device for imaging the sample. Consequently, the rotation allows for efficient transportation of the samples, which are held at the outer lateral surface of the rotatable cylindrical body, in the reaction chamber to various objects related to the assay. Furthermore, by providing the samples at the outer lateral surface of the rotatable cylindrical sample holder with a thin liquid layer thereon provides another advantage in that comparatively small amounts of reagents are needed to perform an assay. The rotation provides for efficient distribution of the reagents and by keeping the reagents in the liquid layer only small amounts of reagents will be wasted as compared to conventional solutions where reagents are flushed over the samples. Also, thermal cycling of the samples is readily accomplished when they are provided at the outer lateral surface where steam may condense and effectively transfer heat to where it is most needed.

The rotation generating member of the present invention is configured to receive a rotatable cylindrical body acting as a sample holder such that at least part of the sample holder can be arranged in the reaction chamber.

In one alternative, when the reaction chamber is adapted to house all of the rotatable cylindrical body, the rotation generating member is at least partly arranged in the reaction chamber.

In another alternative, when the reaction chamber is adapted to house only a portion of the rotatable cylindrical body, the rotation generating means are arranged outside of the reaction chamber. The rotation generating member may then be arranged in the apparatus such that part of the rotatable cylindrical body can be positioned in the reaction chamber through the at least one opening, such as through the opposing openings.

The rotation generating member may comprise a coupling arrangement configured to be engaged with a corresponding coupling arrangement on the rotatable cylindrical body. The coupling arrangement may for example operate by means of magnetic forces enabling torque transmission without mechanical contact between the rotation generating member and the rotatable cylindrical body. The coupling arrangement may be adapted to engage with a corresponding coupling arrangement provided on an end surface of the rotatable cylindrical body so as to not interfere with the part of the rotatable cylindrical body used for holding the samples. Furthermore, the coupling arrangement may in some examples comprise a surface portion suitable for engaging a rotational bearing supporting the sample holder during rotation. The rotational bearing may for example comprise an air bearing.

The coupling arrangement may facilitate handling of the sample holder, such as transport to, from and within the apparatus. In an example, the sample holder may be transported from the reaction chamber to a scanner, such as a confocal microscope, configured to illuminate and image the samples as the holder rotates around its longitudinal axis. The transporting may for example be achieved by means of a gripping arrangement, such as a robotic arm, gripping the sample holder transporting the sample holder to a target location. The coupling arrangement may further be configured to facilitate insertion and removal of the sample holder in the reaction chamber, or different locations within and/or outside the apparatus, and may preferably be configured to cooperate with a corresponding receiving structure at the sample holder. Transport of the sample holder may for example be required in case the assay is distributed over different physical locations or stations, wherein for example the imaging of the samples may be performed at one place and the reactions at another place.

Further, a plurality of sample holders may be used during an assay, or a sequence of assays, wherein a first sample holder may be replaced with a second one when the imaging of the first sample holder is finished. After imaging, the first sample holder may be transported to another station for performing reactions while the second sample holder is being imaged, and then returned to the imaging station when the imaging of the second sample holder is finished. In some examples a plurality of sample holders may be prepared in advance, or "offline", and stored in an intermediate storage while waiting for the assay to be initiated. This may increase uptime of the apparatus and reduce lead times of the assay.

The rotation generating member may be comprised of a first part and a second part positioned on opposing sides of the reaction chamber, or at opposing wall portions of the reaction chamber, such that opposing end portions of the rotatable cylindrical body can be coupled to a respective part of the rotation generating member. The first part may be an active part generating rotation and the second part may be passive part allowing the rotatable cylindrical body to rotate. Alternatively, both parts may be active and capable of rotating the rotatable cylindrical body.

The term "humidifier" refers to a device capable of increasing humidity, such as presence of water, in the atmosphere in the reaction chamber. The humidifier may thus be configured to transform a liquid into gas phase (vapor) and/or into fine liquid droplets suspended in air, or another gas, and release it into the reaction chamber. Fine liquid droplets suspended in air may also be referred to as a spray or aerosol. For the purpose of the present disclosure, vapor and/or suspensions of fine liquid droplets are commonly referred to as "moisture". The atmosphere in the reaction chamber may thus be humidified by adding moisture to it.

The humidifier may employ several different techniques for generating the moisture. Examples of humidifiers include steam generators (also referred to as vaporizers), impeller humidifiers, ultrasonic humidifiers, atomizers, nebulizers, and the like. The vapor, or fine liquid droplets, may be mixed with a gas such as for example air, which may be used as a propellant expelling the mixture into the reaction chamber.

The moisture released into the reaction chamber can then condensate on a sample holder during the assay, such that an elevated temperature and/or amount of liquid suitable for at least part of a biochemical assay can be obtained on the sample holder. In some examples, the humidity in the reaction chamber may be controlled such that the dew point matches the temperature on the surface of the sample holder. This reduces the risk for the samples drying out and further limits excessive condensation on the surface. This may be of particular interest when an additional heat source, such as for example an IR based heat source, is employed to heat the sample holder.

The humidifier may be arranged inside the reaction chamber. Alternatively, part of the humidifier may be arranged outside of the reaction chamber. A conduit may then be provided from the humidifier and into the reaction chamber, through which conduit moisture can be released into the reaction chamber.

In some embodiments, the humidifier includes a steam generator comprising a heating element configured to evaporate water to produce steam, and a steam outlet configured to release the steam in the reaction chamber. The steam generator may further comprise a conduit configured to provide water to be evaporated by the heating element, and, optionally, an air conduit configured to supply an air flow to the steam generator. The conduits for air and for water may in some examples be combined, thereby allowing for a mixture of water and air to be supplied to the steam generator.

In some embodiments, the apparatus may comprise a control unit configured to control an amount of moisture released into the reaction chamber per unit time. The amount of moisture may for example be quantified by volume or weight. The amount of moisture released into the reaction chamber may preferably be based on a temperature in the reaction chamber, such as a temperature of the outer lateral surface of the rotatable cylindrical body, and more specifically a temperature of the samples to be investigated. Temperature information may be provided to the controller by means of a sensor, which may be arranged to generate a signal indicative of the temperature of the outer lateral surface of the rotatable cylindrical body. The sensor may for example be an IR sensor directed towards the rotatable cylindrical body, or an electrical sensor provided at or near the liquid layer formed on the sample holder. In an example, moisture may be released to the reaction chamber during a preparation phase, in which the temperature of the rotatable cylindrical body in the reaction chamber is elevated to a desired target temperature or target range. When the target temperature is reached, the moisture supply may be ceased, before the reagents are added to the sample holder. In further examples, the moisture supply is maintained also during the parts of the assay including supplying the reagents to the sample holder.

The humidifier, and thus the amount of moisture released to the reaction chamber, may for example be controlled by controlling the flow of moisture passing through the outlet of the humidifier, for instance by means of an adjustable constriction, or by adjusting a mixture between air and water supplied in the form of vapor or liquid droplets. Further, in case the humidifier is a steam generator, or vaporizer, the amount of moisture released to the reaction chamber can be controlled by controlling a power supply to a heating element of the steam generator. This allows for the heat of the heating element, and thus the amount of generated steam, to be controlled accordingly. It will be appreciated that one or several of the above measures may be combined and varied to deliver a desired amount of steam to the reaction chamber.

As mentioned above, the moisture supply may be controlled with the aim of reaching and/or maintaining a target temperature at the sample holder. Thus, a sensor signal indicative of the actual temperature may be used as input for a feedback loop controlling the operation of the humidifier. In addition, or as an alternative, a sensor signal indicative of the humidity inside the housing may be used as well. The sensor signal may be supplied to the controller and used as input in the feedback loop controlling the humidifier. The humidity can for example be increased by increasing the supply of water to the humidifier. Conversely, the humidity can be decreased by reducing the water supply. Increasing the humidity may result in more steam being available for condensation on the sample holder, thereby increasing the temperature, whereas reducing the humidity may result in less steam being available for condensation.

The humidifier may further be controlled with the aim of providing a substantially continuous flow of moisture into the reaction chamber during the heating of the sample holder, and/or during the addition of the reagents. This may be achieved by balancing the water supply to the humidifier and, in case of the humidifier being a vaporizer, the power supply to a heating element of the vaporizer. A relatively low power supply combined with a relatively high water supply may result in the heating element dropping to a temperature below 100°C, which risks to result in a ceased steam production. Conversely, a relatively high power supply combined with a relatively low water supply may result in a more or less immediate evaporation of the water and thus an intermittent steam flow. The balancing of the water and power supply may aim at maintaining a certain, and preferably constant, amount of liquid water present inside the steam generator during the entire heating phase of the sample holder.

The rotatable cylindrical body may be configured to be at least partly covered by a liquid layer, which for example may comprise reagents to be added to the samples. The liquid layer may be provided on the outer lateral surface of the rotatable cylindrical body as the rotatable cylindrical body is rotating to facilitate an even distribution of the liquid over the outer lateral surface. A dispenser may be employed to supply the liquid and/or a reagent to the liquid layer.

In some embodiments, a liquid sensor may be provided to generate signal indicative of an amount of liquid present in the liquid layer.

The liquid layer may be formed by means of a liquid contacting means, such as for instance a squeegee, a doctor blade or a glass slide configured to distribute liquid within the liquid layer. The liquid contacting means may thus comprise a surface which can be arranged to form a well-defined gap between the outer lateral surface of the rotatable cylindrical body and the liquid contacting means, through which the liquid layer passes as the rotatable cylindrical body rotates. The thickness and uniformity of the liquid layer may hence be determined by the gap. As a consequence, liquid may be accumulated in a meniscus formed on the liquid contacting means, at the interface between the liquid contacting means and the outer lateral surface of the rotating body. The size of the meniscus may be indicative of the amount of liquid present in the liquid layer. Thus, by measuring a quantity indicative of the size of the meniscus an estimate of the amount of liquid present in the liquid layer may be obtained. This is advantageous since an actual measurement of the entire liquid layer is impractical to realize, partly due to the small volume required to prevent dilution of the added reagents. By monitoring the quantity indicative of the size of the meniscus and actuating a dispenser and/or a liquid removal means accordingly the amount of liquid in the liquid layer may be controlled towards a desired value. This in turn ensures that the desired reagent concentration may be achieved while keeping the reagent consumption at an acceptable level. The amount of liquid present in the liquid layer, for example represented as the size of the meniscus, may be determined by means of a sensor arranged at the liquid contacting means. Such a sensor may for instance be formed as a capacitive sensor or a resistive sensor and may comprise one or several sets of electrodes arranged on a surface of the liquid contacting means coming in contact with the meniscus. In further examples, the liquid contacting means may comprise a temperature sensor for generating a signal indicative of a temperature of the liquid.

In a particular embodiment, the liquid contacting means may be formed of a printed circuit board, PCB, having an edge or surface configured to redistribute the liquid as the sample holder is rotated relative to the PCB, as well as a sensor providing a signal indicative of the amount of liquid that has accumulated at the PCB and/or a temperature thereof. The sensor for the amount of accumulated liquid may for example be implemented as conductive lines arranged on a surface of the PCB.

In other embodiments, the liquid contacting means may be formed of a glass slide or a glass plate. The sensor may be provided as a flexible circuit board attached to the glass plate, e.g. by means of an adhesive.

In some embodiments, the apparatus may comprise a liquid removal means configured to remove liquid from the outer lateral surface of the rotatable cylindrical body. The liquid removal means may for example comprise a reduced pressure device, such as a drainage tube, configured to draw liquid from the rotating body. The liquid removal means may be arranged to draw liquid that has been accumulated at the liquid contacting means, such as for instance from the meniscus. In further examples, the liquid removal means may comprise a mechanical device, such as a squeegee, a blade, or a brush, for removing at least some of the liquid from the outer lateral surface. The liquid removal means may thus be configured to contact a liquid layer present on the rotatable cylindrical body and displace or remove the liquid mechanically.

The liquid removal means may further comprise means for adjusting an angle of attack of the liquid removal means, such as the angle of attack of a blade contacting the liquid layer. By adjusting the angle of attack, the amount of liquid being removed can be controlled. Further, a translating means may be provided to adjust a distance from the surface of the rotatable cylindrical body at which the liquid removal means is positioned. Adjusting the distance from the surface allows for controlling the thickness of the liquid layer remaining on the surface after the liquid removal means has contacted the liquid during rotation of the rotatable cylindrical body. It will be appreciated that the same mechanical element in some examples may serve both as a liquid contacting means for distributing liquid within the liquid layer and as a liquid removal means for removing liquid from the liquid layer, depending for instance on the configuration and angle of attack.

The force of gravity may also be employed, for example by stopping the rotation of the rotatable cylindrical body to allow liquid to gravitate to the lowermost portion of the rotatable cylindrical body, from where it can be actively removed by a liquid removal means as described above or be allowed to form drops falling from the rotatable cylindrical body. The present example may be combined with the liquid contacting means being removed from the surface of the rotatable cylindrical body, such that the liquid contacting means is not contacting the liquid as it moves with gravity towards the lowermost portion of the rotatable cylindrical body.

In yet another example, liquid may be removed from the surface of the rotatable cylindrical body by means of centrifugal forces. This may for example be achieved by rotating the rotatable cylindrical body at rotational speeds sufficiently high to cause liquid to be thrown off from the surface. Advantageously, any liquid contacting means may be removed from the surface prior to the centrifuging.

The signal indicating the amount of accumulated liquid may be supplied to the controller, which may be configured to control the operation of the liquid contacting means (for instance by varying the spacing between the liquid contacting means and the outer lateral surface of the rotatable cylindrical body), or the operation of the liquid removal means. In further examples, the controller may be configured to use the signal indicating the amount of accumulated liquid for controlling the amount of moisture released into the reaction chamber. An increased accumulation of liquid at the liquid contacting means may for example indicate that the moisture production rate, or the amount of moisture released into the reaction chamber per unit time, can be reduced in order to avoid, or at least reduce the effects of, the condensing water diluting the reagents on the sample holder.

The above-mentioned optional, additional features of the apparatus according to the first aspect, when applicable, apply to the method according to the second aspect as well. Further objectives and advantages with the present invention will become apparent when studying the following detailed disclosure, the drawings, and the appended claims. Those skilled in the art realize that different features of the present invention, even if recited in different claims, can be combined in embodiments other than those described in the following.

### Brief description of the drawings

The present inventive concept will now be described in more detail, with reference to the appended drawings showing embodiment(s) of the invention.
Figure 1 shows an illustration of an apparatus according to an embodiment of the present invention.
Figure 2 is a cross section of a housing enclosing a reaction chamber, as well as a humidifier, a temperature sensor and a dispenser according to an embodiment.
Figure 3 is a perspective view of an apparatus according to an embodiment.
Figure 4 is an exploded view of a humidifier according to an embodiment.
Figure 5 is a top view of a liquid contacting means according to an embodiment.
Figure 6 is a schematic diagram relating to an apparatus according to an embodiment.
Figures 7a and 7b are flow charts outlining methods according to some embodiments.

### Detailed description

The present invention relates to techniques for performing biochemical assays on samples, such as for instance DNA or RNA samples, to retrieve DNA sequence information. Generally, the assay includes adding reagents to the sample, such as a fluorophore comprised in a fluorescently labelled nucleotide configured to bind to the samples, and image the sample using some type of microscopy imaging. The technique may involve using four types of fluorophores for labelling a respective one of the four letters A (adenine), C (cytosine), G (guanine) and T (thymidine) used to represent the building blocks, nucleotides, of DNA. Typically, different types of fluorophores are used to label different letters. The imaging may thus comprise taking four images, one for each letter. Other approaches exist where the number of images required per base may be reduced. When the information for one nucleobase has been extracted, the fluorophore related to that base may be removed and another set of reagents may be added to synthesize and read the next base of the DNA strands.

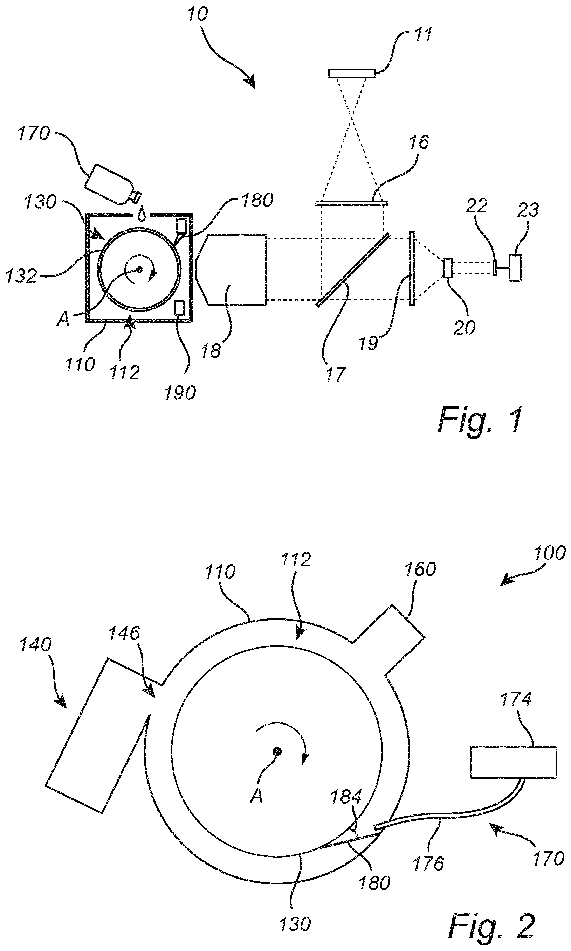

An overview of an apparatus for performing a biochemical assay of samples, such as DNA or RNA fragments, is illustrated in figure 1. The apparatus 100 may be configured to receive a sample holder in the form of a rotatable cylindrical body 130, having an outer lateral surface to which the samples may be attached. The apparatus 100 may further comprise a liquid dispenser 170 and a liquid contacting means 180 for facilitating the addition of reagents to the samples and control a shape of the liquid layer on the outer lateral surface of the sample holder 130. The sample holder 130 may be rotatable around a longitudinal axis, or symmetry axis A to facilitate an even distribution of the reagents over the outer lateral surface, and further to enable efficient scanning of the investigated samples. Further, a heat source, also referred to as an additional heat source 190, may be provided to increase a temperature of the outer lateral surface of the sample holder 130. The heat source 190 may be at least partly arranged within the reaction chamber defined by the housing 110 of the apparatus. The heat source 190 may for instance heat the outer lateral surface by means of convection or infrared radiation.

The scanning may be performed by a scanning device 10, such as a confocal microscope, a light sheet fluorescence microscope, or a wide field microscope, configured to illuminate the samples and to detect photons emitted or scattered from the samples. The rotatable cylindrical body 130 is configured to be rotated around the longitudinal axis A while the scanning device 10 detects photons originating from the samples arranged on the outer lateral surface of the rotatable cylindrical body 130.

As illustrated in figure 1, the scanning device 20 may comprise at least one light source 11 configured to illuminate the samples. The light may be directed to the samples by an optical system, for instance comprising a lens 16, a beam splitter 17 and an objective lens 18.

Scattered and/or fluorescent light from the illuminated samples may be collected by the objective lens 18, collimated and passed through the beam splitter 17. A second optical system 19 may then generate an image of the illuminated sample on a detector 22. The detector 22 is preferably a photodetector configured to generate a signal that can be processed in a signal processing unit 23.

It is to be understood that the specific components and the exact setup of the apparatus 100 and the scanning device 10 disclosed herein are exemplary only. For example, the apparatus 100 may very well use multiple light sources 11 emitting light with different properties, such as wavelengths. Furthermore, the configuration of optical systems, including for instance mirrors, beam splitters, apertures, pin holes, and filters may vary as long scanning of the samples in the liquid layer may be performed. It will also be appreciated that the parts of the assay performed in the reaction chamber may be performed at a physically separate location or setup, and that the sample holder may be transported to a scanning station for performing the imaging. Alternatively, the parts of the assay performed in the reaction chamber may be integrated with the scanning, similar to the setup illustrated in the example of figure 1.

Figure 2 is a schematic cross section of a rotatable cylindrical body 130 and a reaction chamber 112 of an apparatus 100 according to some embodiments of the present inventive concept. The apparatus 100 may be similarly configured as the one discussed above with reference to figure 1. Figure 2 illustrates a housing 110 having an interior defining a reaction chamber 112, which may be at least partly sealed so as to allow a climate, differing from the immediate surroundings of the housing, to be defined at least temporarily in the reaction chamber 112. In different words, the housing may be configured to enable a microclimate to be provided in the reaction chamber 112. The housing 112 may be configured to enclose the entire rotatable cylindrical body 130, or parts of it. In case of the latter, the housing 112 may comprise at least one opening allowing the rotatable cylindrical body 130 to extend therethrough.

The microclimate may be provided by means of a humidifier, such as a steam generator 140 configured to supply steam into the reaction chamber 112. As a result, the humidity inside the reaction chamber may be increased, as well as the temperature of the outer lateral surface of the rotatable cylindrical body 130 as the steam condensates on the surface. Preferably, the reaction chamber 112 may be sufficiently closed or sealed to hinder at least some of the steam from escaping the reaction chamber 112 during an assay, thereby allowing for an elevated temperature during at least the time it takes to perform the assay or allow the reagents to react with the samples. Typical temperatures for DNA sequencing may lie in the range of 50-60 °C, and the reaction times may be in the order of minutes, such as 3-5 minutes (the same order of magnitude both for base incorporation and cleavage). Amplification of DNA fragment may require a temperature in the range 40-50 °C, such as about 43 °C, and a reaction time of about 1 hour. Alternatively, amplification may be performed at a lower temperature, such as room temperature, provided the reaction time is sufficiently long, such as 2 hours. To be able to start sequencing a primer may have to be attached or hybridized to a single stranded DNA fragment. This reaction typically takes 5-10 minutes and may be performed at any temperature in the range from room temperature up to 60 °C. In some cases, the assay may comprise a step of removing the bases that has been added to a single stranded DNA fragment. This enables sequencing to be restarted, possibly with a different primer. The process of removing bases is called strip off and is typically performed at 70 °C for about 1minute.

As illustrated in figure 2, the steam generator 140 may comprise an outlet 146 arranged to release the steam into the reaction chamber 112. The outlet 146 may thus be communicatively coupled to, or integrally formed with, a corresponding passage through a wall of the housing 110 to allow the generated steam to be supplied to the reaction chamber 112. The configuration and operation of the steam generator 140 will be discussed in further detail in connection with the following figures.

The apparatus 100 may further comprise a temperature sensor 160, such as for instance an IR sensor or an electric sensor, configured to provide a signal indicative of a temperature of the outer lateral surface of the rotatable cylindrical body 130. The IR sensor 160 may be attached to the housing 110 and arranged to gather information from at least a portion of the rotatable cylindrical body 130, for example through an opening in a wall of the housing 110. The sensor 160 may further be communicatively connected to a control unit (not shown) receiving the output signal from the sensor 160.

Further, the apparatus 100 may comprise a dispenser 170 for adding a reagent to the outer lateral surface of the rotatable cylindrical body 130. The dispenser 170 may comprise a conduit, or dispensing tool 176, connected to a reservoir 174 storing the reagent. During operation, the reagent may be supplied from the reservoir 174, via the conduit 176, into the reaction chamber 112 and added to a liquid layer arranged on the outer lateral surface of the rotatable cylindrical body 130. A similar arrangement may be used to remove liquid, such as excess liquid, from the rotatable cylindrical body 130. Such a liquid removal means may thus comprise a conduit, such as a drainage tube, connected to a suction means. The addition and removal of reagents and liquid from the liquid layer may be performed with the aim of maintaining a target concentration of the reagents, which for instance may be 50% (by volume) or above.

In some examples, a liquid contacting means 180 may be arranged to distribute liquid, such as the added reagent, within the liquid layer on the rotatable cylindrical body 130. The liquid contacting means 180 may comprise a surface or edge which can be arranged at a certain separation from the outer lateral surface of the rotatable cylindrical body 130 to define a thickness of the liquid layer. Examples of such a liquid contacting means 180, having a surface configured to define a gap between the outer lateral surface and the liquid contacting means 180, includes squeegees, doctor blades and glass slides. The liquid contacting means 180 may be co-located with the dispenser 170 or liquid removal means as described above. Thus, the exit (or entrance, accordingly) of such a tool may be arranged on a surface of the liquid contacting means 180 so as to allow liquid or reagents to be supplied to the liquid layer via the surface of the liquid contacting means 180 (and, consequently, to remove liquid that has been accumulated at the liquid contacting means 180).

As indicated in figure 2, liquid may be accumulated at the interface between the liquid contacting means 180 and the outer lateral surface of the rotatable cylindrical body 130. The accumulated liquid may be considered to form a meniscus 184 extending at least partly along the surface of the liquid contacting means 180. In some examples, reagents can be added to the meniscus by means of the dispenser 170, and in further examples liquid may be drained from the meniscus by means of a liquid removal means. As will be described in the following, the amount of accumulated liquid may be monitored, for example by determining a size or extension of the meniscus 184 and used in a feedback loop controlling an operation of the apparatus 100.

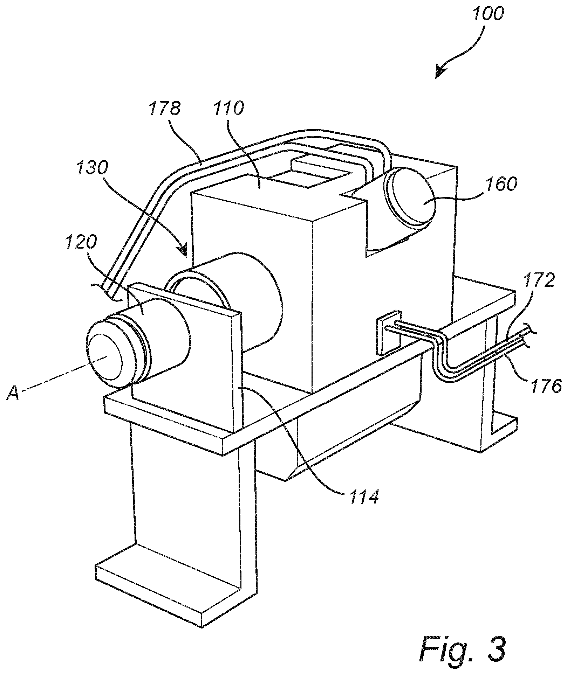

Figure 3 is a perspective view of an apparatus 100 according to some embodiments, which may be similarly configured as the embodiments disclosed above in connection with figures 1 and 2. Figure 3 shows the apparatus 100 when a sample holder, in the shape of a cylindrical rotatable cylindrical body 130, is mounted and partly accommodated in a reaction chamber formed by the housing 110. The protruding part of the rotatable cylindrical body 130 may be attached to a rotation generating member 120 configured to support the rotatable cylindrical body 130 when arranged within the reaction chamber and to rotate the rotatable cylindrical body around the longitudinal axis A. The rotation generating member 120 may for example comprise a motor, such as an electric motor, configured to generate a torque allowing the rotatable cylindrical body 130 to rotate during the assay.

The rotation generating member 120 may comprise, or be coupled to, a coupling arrangement (not shown) configured to be releasably engaged with a corresponding coupling arrangement on the rotatable cylindrical body. The coupling arrangement may for example provide a magnetic coupling allowing the torque generated by the rotation generating member 120 to be transmitted to the rotatable cylindrical body 130 without mechanical contact. The coupling arrangement may further comprise a surface portion suitable for engaging a rotational bearing arranged in a support structure 114 and configured to guide and support the rotatable cylindrical body 130 during rotation. The releasable nature of the coupling arrangement allows for the rotatable cylindrical body 130 to be detached from the coupling arrangement and moved to another station, such as for instance the scanner as discussed with reference to figure 1.

A temperature sensor 160 may be attached to the housing 110 and arranged such that it can measure a temperature on the inside of the reaction chamber 112. Preferably, the temperature sensor 160 may be an IR sensor arranged to receive IR radiation emitted from a portion of the rotatable cylindrical body 130. Thus, the temperature sensor 160 may be arranged at an opening of the housing, allowing access to reaction chamber 112.

Figure 3 further illustrates a tube or conduit 176 of the dispenser 170 for adding a reagent to the rotatable cylindrical body, as well as a tube or conduit forming a liquid removal means 172 for removing liquid from the rotatable cylindrical body 130. The conduits 172, 176 are in the present example illustrated as tubes entering/exiting the housing via a respective bushing. The apparatus 100 may further comprise tubes 178 for flushing the rotatable cylindrical body 130, for instance to remove excess nucleotides prior to imaging.

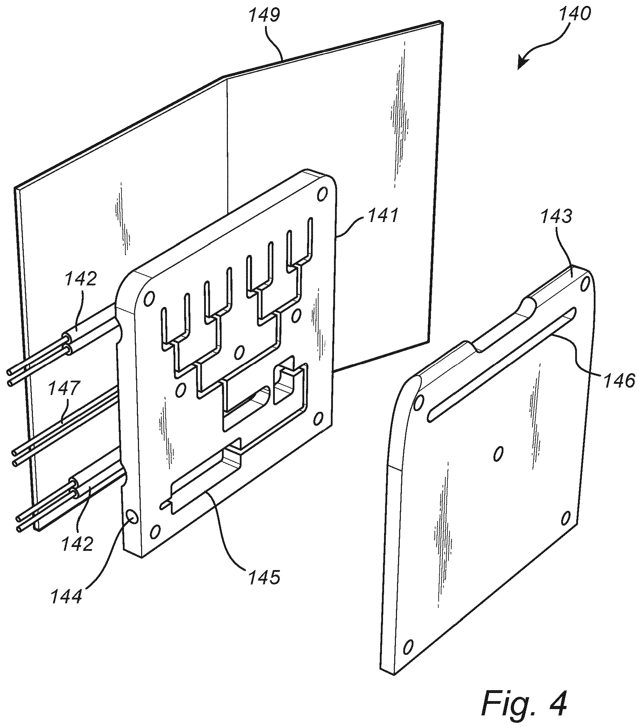

The apparatus 100 may further comprise a humidifier 140, which in the present view is arranged on the side of the housing 110 facing away from the viewer and therefore is not visible. An example of the humidifier 140 will instead be described in the following with reference to figure 4.

Figure 4 is an exploded perspective view of a humidifier 140, which may be used in an apparatus 100 according to any of the above-described embodiments. The humidifier 140 may be configured as a steam generator 140 comprising a heating element 142 configured to evaporate water into steam, a conduit 144 configured to provide water to be evaporated by the heating element 142, and a steam outlet 146 for releasing the steam into the reaction chamber 112. The steam generator 140 may thus be attached to the housing 110, or at least operably coupled to the housing 110 such that the generated steam can be supplied to the reaction chamber 112.

In the present example, the steam generator 140 comprises a main body 141 comprising a channel structure 145 for guiding water and/or steam from the water supply 144 to the outlet 146. The main body 141 may be in thermal contact with the heating element 142 so as to allow the channel structure 145, or at least parts of the channel structure 145, to be heated to a temperature that allows the water to evaporate. The heating element 142 may for example be a resistive heating element generating heat in response to an electrical current being passed therethrough. The temperature of the heating element, and thus its capability of evaporating water into steam, may hence be controlled by varying the electrical power supplied to the heating element 142. The heating element 142 may for example be attached to a surface of the main body so as to transfer the heat generated by the heating element 142 into surfaces of the channel structure 145 accommodating the water/steam.

The steam generator 140 may further comprise a temperature sensor, or thermometer 147, which for instance may be attached to the main body 141. The temperature sensor 147 may be configured to provide a signal indicative of a temperature of the heating element 142, the main body 141 and/or the channel structure 145. The signal may be fed to a controller and used for controlling, inter alia, the power supply to the heating element.

Water, possibly mixed with a gas such as air, may be supplied to the steam generator 140 by means of a conduit 144 connected to the channel structure 145. During operation, the temperature of the supplied water is increased by the heat generated by the heating element 142 until the water starts evaporating. The generated steam may then raise through the channel structure, possibly propelled by an air flow supplied with the water, until it reaches the steam outlet 146 connected to the reaction chamber 112.

The main body 141 may for example be formed of a plate-like structure, such as a metal plate, in which the channel structure may be milled or molded. Further, a cover plate 143 may be arranged to close the channel structure 145 and provide an interface to the housing 110. On the side facing away from the housing 110 a thermal insulation plate 149 may be arranged, protecting the surroundings and operators from the heat generated by the heating element 142.

The amount of moisture supplied into the reaction chamber per unit time may be controlled or adjusted in several ways. Firstly, the flow through the outlet 146 may be controlled, for instance by means of an adjustable restriction. Thus, the amount of steam released into the reaction chamber may be reduced by increasing the restriction and increased by releasing the restriction. Secondly, the evaporation rate may be controlled. This may for example be achieved by varying the power supplied to the heating element 142, or by varying the amount of water supplied to the channel structure 145. It will also be appreciated that by varying the air/water ratio of the air/water mixture supplied to the steam generator 140 the amount of generated steam may be adjusted.

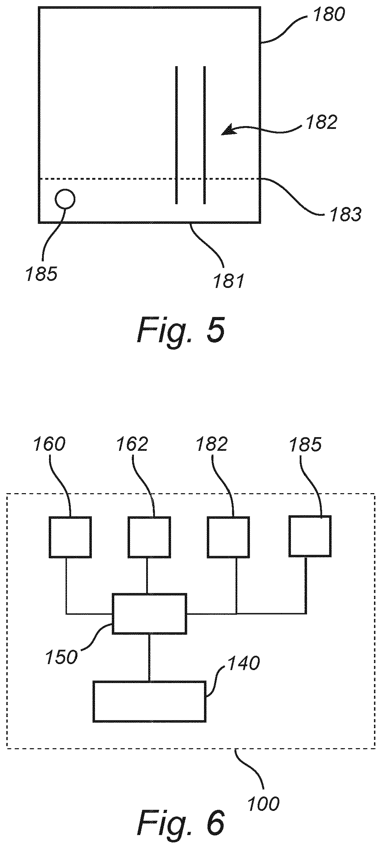

Figure 5 illustrates an example of the liquid contacting means 180 shown in figures 1-3. The liquid contacting means 180 may be formed as a blade and comprise a surface configured to be aligned with the longitudinal axis A of the rotatable cylindrical body 130 and employed for distributing liquid in the liquid layer passing through a gap defined between the surface of the liquid contacting means 180 and the outer lateral surface of the rotatable cylindrical body 130. As the surface is contacting the passing liquid layer, liquid may be accumulated on the liquid contacting means 180. The amount of accumulated liquid may be indicated by the size of the surface portion which is wetted by the liquid. The wetted region is in the present figure indicated by the region between the edge 181 and the dashed line 183.

In the present example, the liquid contacting means 180 is formed of a printed circuit board, PCB, with conductive lines forming sensors for measuring properties of the accumulated liquid. The PCB may for example comprise a capacitive sensor 182 configured to generate a signal indicating the size of the wetted region and thus a total amount of accumulated liquid. The capacitive sensor utilizes the fact that a capacitance between two conductors, such as the conductive lines in figure 5, varies with the dielectric properties of the medium separating the conductors, and that presence of liquid hence may affect the dielectric properties. In an alternative example, the sensor may be a resistive sensor utilizing the varying resistance as the separating gap between the conductors gradually is filled by the liquid.

The liquid contacting means 180 may further comprise a temperature sensor 185, which may be used in addition to the IR sensor 160 discussed in connection with figures 2 and 3, or as an alternative to the same. The temperature sensor 185 may hence be employed to generate a signal indicative of a temperature of the liquid accumulated on the liquid contacting means 180, which may be considered as representative for the temperature in the liquid layer covering the rotatable cylindrical body 130.

Figure 6 is a schematic outline of an apparatus 100 according to some embodiments, which may be similarly configured as the embodiments discussed above in connection with any of the previous figures. Thus, the apparatus may comprise a housing enclosing a reaction chamber, a rotation generating member configured to support a rotatable cylindrical body, and a steam generator configured to release steam to the reaction chamber. In order to avoid undue repetition, reference is made to the description of figures 1-5. In the following, aspects and examples relating to the control and operation of the apparatus in general, and the steam generator in particular, will be discussed.

As illustrated in figure 6, the apparatus 100 may comprise a control unit 150 configured to control an amount of steam released into the reaction chamber. This may for example be implemented as a control of the amount of steam, as measured for instance by volume or weight, released per unit time. The control unit 150 may hence be operatively connected to the steam generator 140 and/or to elements or structures capable of affecting the release of steam into the reaction chamber. The control unit 150 may thus be capable of affecting the evaporation process, for instance by varying the amount of heat generated by a heating element of the steam generator 140 or an amount of water supplied to the steam generator 140. The control unit 150 may also be configured to control a restriction of a passage through which the steam passes on its way into the reaction chamber. The restriction may for example be arranged at the steam outlet, as described with reference to figure 4. In further examples, the control unit 150 may be configured to control the operation of other elements of the apparatus, such as the rotation generating member, the dispenser, the liquid removal means and the liquid contacting means.

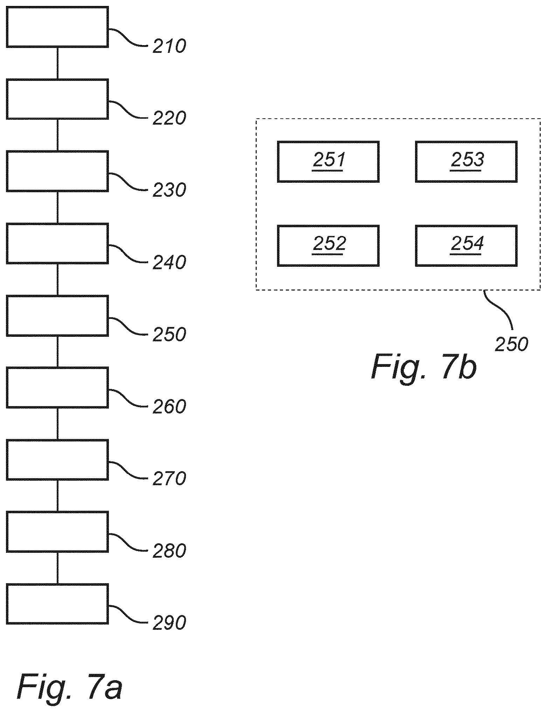

The control unit 150 may hence comprise a processor, such as a central processing unit (CPU), microcontroller or microprocessor, configured to control functions of the apparatus 100 based on a signal provided by a sensor, such as a temperature sensor 160 and/or 185, a humidity sensor 162 (arranged to provide a signal indicative of the humidity within the reaction chamber) and a liquid sensor 182 as previously described. Examples of such functions 210-290 and 251-254 are described below in connection with figures 7a and 7b.

Figure 7a is a flow chart illustrating a method for performing an assay according to some embodiments, using an apparatus 100 as disclosed in for instance figures 1-6. The method may comprise a set of actions or steps, also referred to as functions, carried out by the apparatus and/or a scanning device such as a confocal microscope.

The method may hence comprise arranging 210 the rotatable cylindrical body at least partly in the reaction chamber, rotating 220 the rotatable cylindrical body, and heating 230 it by releasing steam into the reaction chamber. The method may further comprise generating 240 a signal indicative of a temperature on the outer lateral surface of the rotatable cylindrical body and controlling 250 the amount of steam released into the reaction chamber per unit time based on the signal. In some examples, the method also includes providing 260 a liquid layer on the outer lateral surface, removing 270 at least part of the liquid layer by a liquid removal means, and adding 280 a reagent to the liquid layer. The liquid layer may for example be provided 260 by steam condensing on the outer lateral surface and, in some examples, by adding further liquid through a dispensing means. In subsequent steps of the assay, the samples arranged on the rotatable cylindrical body may be imaged 290 or scanned by a scanning device. The scanning device may be integrated with the apparatus 100 comprising the reaction chamber or provided as a separate station to which the rotatable cylindrical body may be transported for the imaging.

The above-described control unit 150 may be configured to control at least the heating 230, and more particularly the releasing 250 of steam into the reaction chamber. It will however be appreciated that the control unit 150 may be configured to control one or several of the other functions as well, such as the arranging 210 of the rotatable cylindrical body in the reaction chamber, the rotating 220 of the rotatable cylindrical body, the providing 260, 270 of a liquid layer as well as a reagent, and the operation of the liquid removal means.

Figure 7b illustrates optional steps for controlling 250 the amount of steam released to the reaction chamber, with the aim of providing a controlled, elevated temperature for the samples while at the same time preventing the samples from drying out and the reagents from being too diluted. The method 250 may comprise controlling 251 a power supply connected to a heater comprised in the steam generator, controlling 252 a restriction of a flow of steam into the reaction chamber, controlling 253 an air flow to the steam generator, and controlling 254 a water flow to the steam generator.

A person skilled in the art realizes that the present invention is not limited to the embodiments described above. On the contrary, many modifications and variations are possible within the scope of the appended claims. Such modifications and variations can be understood and effected by a skilled person in practicing the claimed invention, from a study of the drawings, the description, and the appended claims.

## Claims

1. An apparatus (100) for conducting a biochemical assay on a sample, the apparatus comprising
a housing (110) enclosing a reaction chamber (112);
a rotation generating member (120) configured to support a rotatable cylindrical body (130) such that at least part of the rotatable cylindrical body can be arranged within the reaction chamber, wherein the rotatable cylindrical body is configured to hold at least one sample at an outer lateral surface thereof;
a humidifier (140) configured to humidify an atmosphere in said reaction chamber;
wherein the rotation generating member is further configured to rotate the rotatable cylindrical body around a longitudinal central axis (A) of the rotatable cylindrical body while at least a part of the assay is performed,
wherein the apparatus comprises a sample holder, and
wherein the sample holder comprises the rotatable cylindrical body.

2. The apparatus according to claim 1, further comprising a control unit (150) operatively connected to the humidifier to control an amount of moisture released into the reaction chamber per unit time.

3. The apparatus according to claim 2, further comprising a first temperature sensor (160) configured to provide a signal indicative of a temperature on the outer lateral surface of the rotatable cylindrical body, wherein the control unit is configured to control the humidifier based on the signal provided by the first temperature sensor.

4. The apparatus according to any of the preceding claims, further comprising a heat source (190) configured to heat the outer lateral surface of the rotatable cylindrical body.

5. The apparatus according to any of the preceding claims, wherein the humidifier is a steam generator comprising:
a heating element (142) configured to evaporate water to produce the steam;
a conduit (144) configured to provide the water to be evaporated by the heating element;
a steam outlet (146) configured to release the steam in the reaction chamber.

6. The apparatus according to any one of claims 1 to 5, wherein the apparatus is configured to provide a liquid layer covering at least a part of the rotatable cylindrical body; wherein the apparatus further comprises a liquid contacting means (180) configured to distribute liquid within said liquid layer.

7. The apparatus according to claim 6, wherein the liquid contacting means comprises a liquid sensor (182) configured to provide a signal indicative of an amount of liquid present in said liquid layer.

8. The apparatus according to claim 7, wherein the apparatus further comprises at least one of a dispenser (170) for adding a reagent to the liquid layer or adding liquid to the liquid layer and a liquid removal means (172) arranged for removing liquid from the liquid layer.

9. The apparatus according to claim 8, configured to control at least one of the dispenser and the liquid removal means based on the signal indicative of the amount of liquid present in the liquid layer.

10. A method for performing an assay, comprising the steps of
arranging (210) a rotatable cylindrical body at least partly in a reaction chamber enclosed by a housing, wherein at least one sample to be studied in the assay is arranged on an outer lateral surface of the rotatable cylindrical body;
rotating (220) said rotatable cylindrical body around a longitudinal central axis (A) thereof; and
humidifying (230) an atmosphere in said reaction chamber.

11. The method according to claim 10, further comprising
generating (240) a signal indicative of a temperature on the outer lateral surface of the rotatable cylindrical body, and
controlling (250) an amount of moisture released to the reaction chamber per unit time, based on the signal.

12. The method according to claim 11, wherein the moisture is generated by a steam generator releasing steam into the reaction chamber, and wherein the step of controlling an amount of moisture released to the reaction chamber comprises at least one of:
controlling (251) a power supply (143) connected to a heater comprised in said steam generator;
restricting (252) a flow of steam into the reaction chamber;
controlling (253) an air flow to said steam generator; and
controlling (254) a water flow to said steam generator.

13. The method according to any one of claims 10-12, further comprising providing (260) a liquid layer on the outer lateral surface of the rotatable cylindrical body; and providing (280) at least one reagent to the liquid layer.

14. The method according to claim 13, further comprising removing (270) at least part of the liquid in the liquid layer.

15. The method according to claim 14, further comprising:
measuring a quantity indicative of a size of a meniscus of said liquid layer formed between a liquid contacting means and said rotatable cylindrical body; and
adjusting at least one of the following based on the measured quantity:
an amount of liquid provided in the liquid layer;
the amount of moisture released to the reaction chamber; and
an amount of the at least one reagent provided to the liquid layer.

## Patentansprüche

1. Vorrichtung (100) zum Durchführen eines biochemischen Tests einer Probe, wobei die Vorrichtung Folgendes umfasst:
ein Gehäuse (110), das eine Reaktionskammer (112) umschließt;
ein Rotationserzeugungselement (120), das konfiguriert ist, um einen drehbaren zylindrischen Körper (130) derart zu tragen, dass mindestens ein Teil des drehbaren zylindrischen Körpers innerhalb der Reaktionskammer angeordnet werden kann, wobei der drehbare zylindrische Körper konfiguriert ist, um an einer seitlichen Außenfläche davon mindestens eine Probe zu halten;
einen Befeuchter (140), der konfiguriert ist, um eine Atmosphäre in der Reaktionskammer zu befeuchten;
wobei das Rotationserzeugungselement ferner konfiguriert ist, um den drehbaren zylindrischen Körper um eine Längsachse (A) des drehbaren zylindrischen Körpers zu drehen, während mindestens ein Teil des Tests durchgeführt wird,
wobei die Vorrichtung eine Probenhalterung umfasst und
wobei die Probenhalterung den drehbaren zylindrischen Körper umfasst.

2. Vorrichtung nach Anspruch 1, ferner umfassend eine Steuereinheit (150), die funktionell mit dem Befeuchter verbunden ist, um eine pro Zeiteinheit in die Reaktionskammer freigesetzte Feuchtigkeitsmenge zu steuern.

3. Vorrichtung nach Anspruch 2, ferner umfassend einen ersten Temperatursensor (160), der konfiguriert ist, um ein Signal bereitzustellen, das eine Temperatur auf der seitlichen Außenfläche des drehbaren zylindrischen Körpers anzeigt, wobei die Steuereinheit konfiguriert ist, um den Befeuchter basierend auf dem von dem ersten Temperatursensor bereitgestellten Signal zu steuern.

4. Vorrichtung nach einem der vorhergehenden Ansprüche, ferner umfassend eine Wärmequelle (190), die zum Erwärmen der seitlichen Außenfläche des drehbaren zylindrischen Körpers konfiguriert ist.

5. Vorrichtung nach einem der vorhergehenden Ansprüche, wobei es sich bei dem Befeuchter um einen Dampferzeuger handelt, umfassend:
ein Heizelement (142), das konfiguriert ist, um Wasser zu verdampfen, um den Dampf zu erzeugen;
eine Leitung (144), die konfiguriert ist, um das von dem Heizelement zu verdampfende Wasser bereitzustellen;
einen Dampfauslass (146), der konfiguriert ist, um den Dampf in der Reaktionskammer abzugeben.

6. Vorrichtung nach einem der Ansprüche 1 bis 5, wobei die Vorrichtung konfiguriert ist, um eine Flüssigkeitsschicht bereitzustellen, die mindestens einen Teil des drehbaren zylindrischen Körpers bedeckt; wobei die Vorrichtung ferner eine Flüssigkeitskontakteinrichtung (180) umfasst, die konfiguriert ist, um Flüssigkeit innerhalb der Flüssigkeitsschicht zu verteilen.

7. Vorrichtung nach Anspruch 6, wobei die Flüssigkeitskontakteinrichtung mindestens einen Flüssigkeitssensor (182) umfasst, der konfiguriert ist, um ein Signal bereitzustellen, das eine in der Flüssigkeitsschicht vorhandene Flüssigkeitsmenge anzeigt.

8. Vorrichtung nach Anspruch 7, wobei die Vorrichtung ferner mindestens eines von einem Spender (170) zum Zugeben eines Reagens zu der Flüssigkeitsschicht oder zum Zugeben von Flüssigkeit zu der Flüssigkeitsschicht und einer Flüssigkeitsentfernungseinrichtung (172), die zum Entfernen von Flüssigkeit von der Flüssigkeitsschicht angeordnet ist, umfasst.

9. Vorrichtung nach Anspruch 8, die konfiguriert ist, um mindestens eines von dem Spender und der Flüssigkeitsentfernungseinrichtung auf der Grundlage des Signals, das die in der Flüssigkeitsschicht vorhandene Flüssigkeitsmenge anzeigt, zu steuern.

10. Verfahren zur Durchführung eines Tests, umfassend die folgenden Schritte:
Anordnen (210) eines drehbaren zylindrischen Körpers mindestens teilweise in einer von einem Gehäuse umschlossenen Reaktionskammer, wobei mindestens eine in dem Test zu untersuchende Probe auf einer seitlichen Außenfläche des drehbaren zylindrischen Körpers angeordnet ist;
Drehen (220) des drehbaren zylindrischen Körpers um eine Längsachse (A) davon; und
Befeuchten (230) einer Atmosphäre in der Reaktionskammer.

11. Verfahren nach Anspruch 10, ferner umfassend:
Erzeugen (240) eines Signals, das eine Temperatur auf der seitlichen Außenfläche des drehbaren zylindrischen Körpers anzeigt, und
Steuern (250) einer pro Zeiteinheit in die Reaktionskammer abgegebenen Feuchtigkeitsmenge auf der Grundlage des Signals.

12. Verfahren nach Anspruch 11, wobei die Feuchtigkeit durch einen Dampferzeuger erzeugt wird, der Dampf in die Reaktionskammer abgibt, und wobei der Schritt des Steuerns einer in die Reaktionskammer abgegebenen Feuchtigkeitsmenge mindestens eines der Folgenden umfasst:
Steuern (251) einer Stromversorgung (143), die mit einer in dem Dampferzeuger enthaltenen Heizung verbunden ist;
Beschränken (252) eines Dampfstroms in die Reaktionskammer;
Steuern (253) eines Luftstroms zu dem Dampferzeuger; und
Steuern (254) eines Wasserflusses zu dem Dampferzeuger.

13. Verfahren nach einem der Ansprüche 10 bis 12, ferner umfassend das Bereitstellen (260) einer Flüssigkeitsschicht auf der seitlichen Außenfläche des drehbaren zylindrischen Körpers und das Bereitstellen (280) mindestens eines Reagens für die Flüssigkeitsschicht.

14. Verfahren nach Anspruch 13, ferner umfassend das Entfernen (270) von mindestens einem Teil der Flüssigkeit in der Flüssigkeitsschicht.

15. Verfahren nach Anspruch 14, ferner umfassend:
Messen einer Menge, die eine Größe eines Meniskus der zwischen einer Flüssigkeitskontakteinrichtung und dem drehbaren zylindrischen Körper gebildeten Flüssigkeitsschicht anzeigt;
und
Anpassen von mindestens einem der Folgenden auf der Grundlage der gemessenen Menge:
einer in der Flüssigkeitsschicht bereitgestellten Flüssigkeitsmenge;
der in die Reaktionskammer abgegebenen Feuchtigkeitsmenge; und
einer Menge des mindestens einen für die Flüssigkeitsschicht bereitgestellten Reagens.

## Revendications

1. Appareil (100) permettant de réaliser un dosage biochimique sur un échantillon, l'appareil comprenant
un boîtier (110) renfermant une chambre de réaction (112) ;
un élément générateur de rotation (120) configuré pour supporter un corps cylindrique rotatif (130) de sorte qu'au moins une partie du corps cylindrique rotatif puisse être disposée à l'intérieur de la chambre de réaction, le corps cylindrique rotatif étant configuré pour retenir au moins un échantillon au niveau d'une surface latérale extérieure de celui-ci ;
un humidificateur (140) configuré pour humidifier une atmosphère dans ladite chambre de réaction ;
l'élément générateur de rotation étant en outre configuré pour faire tourner le corps cylindrique rotatif autour d'un axe central longitudinal (A) du corps cylindrique rotatif pendant qu'au moins une partie de l'essai est effectuée,
l'appareil comprenant un porte-échantillon, et
le porte-échantillon comprenant le corps cylindrique rotatif.

2. Appareil selon la revendication 1, comprenant en outre une unité de commande (150) reliée fonctionnellement à l'humidificateur pour réguler une quantité d'humidité libérée dans la chambre de réaction par unité de temps.

3. Appareil selon la revendication 2, comprenant en outre un premier capteur de température (160) configuré pour fournir un signal indicatif d'une température sur la surface latérale extérieure du corps cylindrique rotatif, l'unité de commande étant configurée pour commander l'humidificateur sur la base du signal fourni par le premier capteur de température.

4. Appareil selon l'une quelconque des revendications précédentes, comprenant en outre une source de chaleur (190) configurée pour chauffer la surface latérale extérieure du corps cylindrique rotatif.

5. Appareil selon l'une quelconque des revendications précédentes, dans lequel l'humidificateur est un générateur de vapeur comprenant :
un élément chauffant (142) configuré pour faire évaporer l'eau afin de produire de la vapeur ;
un conduit (144) configuré pour fournir l'eau à faire évaporer par l'élément chauffant ;
une sortie de vapeur (146) configurée pour libérer la vapeur dans la chambre de réaction.

6. Appareil selon l'une quelconque des revendications 1 à 5, l'appareil étant configuré pour fournir une couche de liquide recouvrant au moins une partie du corps cylindrique rotatif ; l'appareil comprenant en outre un moyen de contact avec le liquide (180) configuré pour distribuer du liquide à l'intérieur de ladite couche de liquide.

7. Appareil selon la revendication 6, dans lequel le moyen de contact avec le liquide comprend un capteur de liquide (182) configuré pour fournir un signal indicatif d'une quantité de liquide présente dans ladite couche de liquide.

8. Appareil selon la revendication 7, l'appareil comprenant en outre au moins l'un d'un distributeur (170) pour ajouter un réactif à la couche de liquide ou pour ajouter du liquide à la couche de liquide et d'un moyen d'élimination de liquide (172) conçu pour éliminer un liquide de la couche de liquide.

9. Appareil selon la revendication 8, configuré pour commander au moins l'un du distributeur et du moyen d'élimination de liquide sur la base du signal indicatif de la quantité de liquide présente dans la couche de liquide.

10. Procédé pour réaliser un essai, comprenant les étapes consistant à
disposer (210) un corps cylindrique rotatif au moins partiellement dans une chambre de réaction entourée d'un boîtier, au moins un échantillon à étudier dans l'essai étant disposé sur une surface latérale extérieure du corps cylindrique rotatif ;
faire tourner (220) ledit corps cylindrique rotatif autour d'un axe central longitudinal (A) de celui-ci ; et
humidifier (230) une atmosphère dans ladite chambre de réaction.

11. Procédé selon la revendication 10, comprenant en outre les étapes consistant à
générer (240) un signal indiquant une température sur la surface latérale extérieure du corps cylindrique rotatif, et
réguler (250) une quantité d'humidité libérée dans la chambre de réaction par unité de temps, sur la base du signal.

12. Procédé selon la revendication 11, dans lequel l'humidité est générée par un générateur de vapeur libérant de la vapeur dans la chambre de réaction, et dans lequel l'étape de contrôle d'une quantité d'humidité libérée dans la chambre de réaction comprend au moins l'une des étapes consistant à :
commander (251) une alimentation électrique (143) reliée à un réchauffeur compris dans ledit générateur de vapeur ;
restreindre (252) le débit de vapeur dans la chambre de réaction ;
réguler (253) un débit d'air vers ledit générateur de vapeur ; et
réguler (254) un débit d'eau vers ledit générateur de vapeur.

13. Procédé selon l'une quelconque des revendications 10 à 12, comprenant en outre
la prévision (260) d'une couche de liquide sur la surface latérale extérieure du corps cylindrique rotatif ; et la prévision (280) d'au moins un réactif sur la couche de liquide.

14. Procédé selon la revendication 13, comprenant en outre l'élimination (270) d'au moins une partie du liquide dans la couche de liquide.

15. Procédé selon la revendication 14, comprenant en outre :
la mesure d'une quantité indicative d'une taille d'un ménisque de ladite couche de liquide formée entre un moyen de contact avec un liquide et ledit corps cylindrique rotatif ; et
l'ajustement d'au moins un des paramètres suivants en fonction de la quantité mesurée :
une quantité de liquide apportée dans la couche de liquide ;
la quantité d'humidité libérée dans la chambre de réaction ; et
une quantité du réactif apporté à la couche de liquide.
